# EUROPÄISCHE PATENTSCHRIFT

(11) **EP 0 902 910 B1**
(45) Veröffentlichungstag und Bekanntmachung des Hinweises auf die Patenterteilung: **02.01.2002**
(21) Anmeldenummer: 97926978.4
(22) Anmeldetag: 30.05.1997
(51) Int. Cl.: G02F 1/313, G02F 1/01, G02F 1/29

(54) **DIGITALER OPTISCHER SCHALTER**
DIGITAL OPTICAL SWITCH
COMMUTATEUR OPTIQUE NUMERIQUE

(30) Priorität: 05.06.1996 DE 19623888
(43) Veröffentlichungstag der Anmeldung: 24.03.1999
(73) Patentinhaber: Heinrich-Hertz-Institut für Nachrichtentechnik Berlin GmbH, 10587 Berlin (DE)
(72) Erfinder: KEIL, Norbert, D-14089 Berlin (DE); YAO, Huihai, D-12163 Berlin (DE); ZAWADZKI, Crispin, D-12309 Berlin (DE)
(74) Vertreter: Rudolph, Margit
(86) Internationale Anmeldenummer: DE9701129
(87) Internationale Veröffentlichungsnummer: WO9746909

(56) Entgegenhaltungen:
- EP-A- 0 025 386
- PATENT ABSTRACTS OF JAPAN vol. 010, no. 080 (P-441), 29.März 1986 & JP 60 217346 A (OKI DENKI KOGYO KK), 30.Oktober 1985,
- PATENT ABSTRACTS OF JAPAN vol. 011, no. 087 (P-557), 17.März 1987 & JP 61 240227 A (MATSUSHITA ELECTRIC IND CO LTD), 25.Oktober 1986, & DATABASE WPI Week 8649 Derwent Publications Ltd., London, GB; AN 86-322962
- F..M.M.SUYTEN ET AL.: "A digital thermo-optic 2x2 switch based on non linear optic polymer" PROCEEDINGS OF THE SPIE (THE INTERNATIONAL SOCIETY FOR OPTICAL ENGINEERING), Bd. 2025, 1993, Seiten 479-487, XP000674809
- KEIL N ET AL: "Polymer waveguide optical switch with <-40dB polarisation independent crosstalk " ELECTRONICS LETTERS, Bd. 32, Nr. 7, 28.März 1996, Seiten 655-657, XP000584166

## Beschreibung

Die Erfindung bezieht sich auf einen digitalen optischen Schalter umfassend-einen ersten Abschnitt, genannt Eingangsabschnitt, mit einem ersten ankommenden Wellenleiter und einem zweiten ankommenden Wellenleiter, wobei sich diese Wellenleiter bis zu einem Punkt ihres Wechselwirkungsbereiches annähern und in diesem berühren, und einem zweiten Abschnitt, genannt Ausgangsabschnitt, mit einem dritten ausgehenden Wellenleiter und einem vierten ausgehenden Wellenleiter, wobei sich die ausgehenden Wellenleiter von diesem erwähnten Punkt bis zu einem Punkt außerhalb ihres Wechselwirkungsbereiches voneinander entfernen, wobei sich die Wellenleiter des zweiten Abschnitts an diejenigen des ersten Abschnitts anschließen, und Mittel zum steuerbaren Beeinflussen des Lichtausbreitungszustandes nach der adiabatischen Modenevolution.

Optische Schalter sind attraktive Komponenten für die Vermittlung von breitbandigen optischen Signalen in optisch transparenten Netzen, für den Schaltkreisschutz durch das Überbrücken eines fehlerhaften Systems oder Kabels und für Raumschalter in transparenten optischen Netzknoten. Das Schalten eines TV-Kabels in LAN (Local Area Networks), von breitbandigen optischen Rückwänden eines Computers und von optischen Signalen in Sensoren und Autos stellen weitere Anwendungen in der Telekommunikation, in der Mikrosystemtechnik und in der Automobilbranche dar. Diese verschiedenen Anwendungen erfordern unterschiedliche Schaltparameter, wie ein geringes Übersprechen und geringe Schaltleistung, Polarisationsunabhängigkeit und Wellenlängenunempfindlichkeit.

Der Stand der Technik, von dem die Erfindung ausgeht, ist der US-PS 4 775 207 bzw. Appl. Phys. Lett. **51** (16), 19 October 1987, pp. 1230-1232 und der EP 0 457 406 zu entnehmen.

Die erstgenannten Veröffentlichungen beziehen sich auf einen digitalen optischen Schalter mit X-förmig angeordneten Wellenleitern auf der Basis von LiNbO₃, wobei die Breite der beiden konvergierenden Wellenleiter im Eingangsabschnitt unterschiedlich ist. Die Ausgangswellenleiter sind vom Berührungspunkt aus von Elektroden umschlossen. Die beiden ankommenden Wellenleiter im Eingangsabschnitt und die beiden vom Berührungspunkt ausgehenden Wellenleiter im Ausgangsabschnitt schließen zueinander einen Winkel Θ mit Θ << Δβ/γ ein, wobei Δβ die durchschnittliche Differenz der Ausbreitungskonstanten der zwei symmetrischen Moden und γ die transversale Wellenkonstante in der Wellenleiterumgebung bezeichnet. Bei diesem viertorigen digitalen elektrooptischen Schalter basiert der Schaltvorgang auf der adiabatischen Modenentwicklung unter Berücksichtigung der in ihrer Breite asymmetrischen Eingangswellenleiter. Damit wird erreicht, daß gezielt nur eine bestimmte Mode bei entsprechender Ansteuerung der Ausgangswellenleiter in den Wellenleitern dieses DOS geführt wird.

In EP 0 457 406 wird ein digitaler optischer Schalter beschrieben, bei dem die ankommenden Wellenleiter im Eingangsabschnitt in ihrer Form asymmetrisch zueinander und die ausgehenden Wellenleiter im Ausgangsabschnitt in ihrer Form asymmetrisch oder symmetrisch zueinander und elektrisch schaltbar ausgebildet sind, wobei die Asymmetrie in der Form der Wellenleiter im Eingangs- und Ausgangsabschnitt durch einen geradlinigen und einen gebogenen zueinander zulaufenden bzw. voneinander sich entfernenden Wellenleiter realisiert ist. Durch die gebogene Form der sich im Eingangsbereich annähernden bzw. sich im Ausgangsbereich entfernenden Wellenleiter soll eine Verkürzung des Bauelements im Vergleich zum vorher beschriebenen DOS erreicht werden.

In den bisher dem Stand der Technik nach beschriebenen Anordnungen für 2x2-DOS ist die für das Prinzip der adiabatischen Modenevolution notwendige Asymmetrie mindestens teilweise bereits während ihrer Herstellung im Eingangs- und/oder Ausgangsabschnitt realisiert worden. Die adiabatische Lichtausbreitung ist nur bei geringen Änderungen der Wellenleiterparameter möglich, so daß die optische Energie, die auf den Schalter in einer gegebenen Grundmode trifft, im wesentlichen auch in dieser Mode erhalten bleibt, also keine Modenumwandlung stattfindet. Wenn also optische Energie in einer niedrigeren Modenordnung auf den Schalter trifft, wird das Licht durch den Ausgangswellenleiter geführt, der den höheren Brechungsindex hat, resultierend in einem höheren Extinktionsverhältnis, wenn die Ausbreitung der optischen Energie im Schalter im wesentlichen adiabatisch verläuft.

Weiterhin sind digitale optische Schalter bekannt, die aus 1x2-Y-Zweigen zusammengesetzt sind. So wurde auf der ECOC'95 - Brussels über einen digitalen thermo-optischen 1x2-Schalter auf Polymerbasis berichtet (siehe: Proc. 21st Eur. Conf. on Opt. Comm., pp. 1063-1065), bei dem die Wellenleiter eingegraben sind, die Ausgangszweige einen Winkel von 0,12 ° einschließen und Heizelektroden beide Zweige vollständig bedeckend angeordnet sind. Beim Heizen eines Ausgangszweiges wird das Licht in dem ungeheizten Zweig geführt. Gemessen wurde dann ein Extinktionskoeffizient in dem geheizten Zweig von besser 20 dB für eine Ansteuerleistung zwischen 130 mW und 230 mW, bei etwa 180 mW erreichte der Extinktionskoeffizient einen Wert von 27 dB.

In einem anderem Beitrag der ECOC'95 - Brussels wird erstmals ein 1x8 DOS beschrieben, der aus drei Kaskaden von 1x2 Schaltern zusammengesetzt ist (siehe: Proc. 21st. Eur. Conf. on Opt. Comm., pp. 1059-1062). Auch in dieser Lösung wird der thermo-optische Effekt in Polymer-Wellenleitern ausgenutzt, der bei geringen Ansteuerspannungen eine große Änderung des Brechungsindexes und damit gezielt eine Modenführung bewirken kann.

Aufgabe der Erfindung ist es, einen digitalen optischen Schalter mit zwei Eingängen und zwei Ausgängen anzugeben, bei dem die Bedingungen für die adiabatische Modenentwicklung je nach Anwendungsgebiet flexibel einstellbar sind, und der aber trotzdem einfach technologisch herstellbar ist.

Die Aufgabe wird erfindungsgemäß dadurch gelöst, daß in einem digitalen optischen Schalter der eingangs erwähnten Art der erste ankommende Wellenleiter zum zweiten ankommenden Wellenleiter im Eingangsabschnitt und der dritte ausgehende Wellenleiter zum vierten ausgehenden Wellenleiter im Ausgangsabschnitt identisch zueinander in Querschnitt, Brechungsindex und Symmetrisch in ihrer Anordnung bezüglich der Ausbreitungsrichtung des Lichtes sind und strukturierte Elektroden mit örtlich variabler Breite die Wellenleiter derart überlappen, daß sich eine örtlich variable Einwirkung auf den Wellenleiter ergibt, und eine der im Eingangsabschnitt angeordneten und strukturierten Elektroden und eine der im Ausgangsabschnitt angeordneten strukturierten Elektroden elektrisch ansteuerbar ausgebildet sind.

Die erfindungsgemäße Lösung ermöglicht durch die Anordnung von jeweils zwei gleichartigen Wellenleitern im Eingangs- und Ausgangsabschnitt und benachbart zu diesen angeordneten und bezüglich der Wellenleiter taperförmig auf diese wirkenden Elektroden, eine getrennte Einstellbarkeit der Parameter in jedem Wellenleiterzweig zur Realisierung der adiabatischen Modenentwicklung. Damit kann ein asymmetrischer Wellenleiterübergang realisiert werden, ohne eine Voreinstellung durch die Wellenleitergeometrie bereits während der Herstellung in einem Abschnitt des DOS vornehmen zu müssen, da beide Abschnitte, der Eingangs- und der Ausgangsabschnitt, als Schaltabschnitte in der erfindungsgemäßen Lösung ausgestaltet sind. Der erfindungsgemäße DOS, der auf der adiabatischen Modenentwicklung basiert, zeigt ein stufenförmiges Schaltverhalten, das dazu führt, daß ein definierter Schaltzustand so lange aufrecht erhalten wird, wie eine angelegte Schaltspannung oder ein Strom oberhalb eines Schwellwertes liegt. Er ermöglicht durch die flexible Einstellbarkeit seines Arbeitsregimes über die Elektroden eine große Herstellungstoleranz und verringert die Notwendigkeit einer präzisen Einstellung der Schaltspannung oder einer präzisen Stromkontrolle. Außerdem ist ein solcher DOS wellenlängenunempfindlich.

In Ausführungsformen der Erfindung ist vorgesehen, daß
- der erste ankommende Wellenleiter und der zweite ankommende Wellenleiter sich geradlinig unter einem Winkel Θ mit Θ << Δβ /γ, wobei Δβ die durchschnittliche Differenz der Ausbreitungskonstanten der zwei symmetrischen Moden und γ die transversale Wellenkonstante in der Wellenleiterumgebung bezeichnet, im Eingangsabschnitt einander nähern und der dritte ausgehende Wellenleiter und der vierte ausgehende Wellenleiter sich geradlinig unter dem gleichen Winkel Θ im Ausgangsabschnitt voneinander entfernen oder
- der erste ankommende Wellenleiter und der zweite ankommende Wellenleiter sich bogenförmig im Eingangsabschnitt einander nähern und der dritte ausgehende Wellenleiter und der vierte ausgehende Wellenleiter sich bogenförmig im Ausgangsabschnitt voneinander entfernen, in einer speziellen Ausgestaltung der bisher erwähnten Ausführungsformen sind die ankommenden Wellenleiter im Eingangsabschnitt identisch bezüglich Querschnitt, und Brechungsindex und Symmetrisch in ihrer Anordnung zu den ausgehenden Wellenleitern im Ausgangsabschnitt ausgebildet, oder
- der erste ankommende Wellenleiter und der zweite ankommende Wellenleiter sich geradlinig unter einem Winkel Θ mit Θ << Δβ/γ im Eingangsabschnitt einander nähern und der dritte ausgehende Wellenleiter und der vierte ausgehende Wellenleiter sich bogenförmig im Ausgangsabschnitt voneinander entfernen oder
- der erste ankommende Wellenleiter und der zweite ankommende Wellenleiter sich bogenförmig im Eingangsabschnitt einander nähern und der dritte ausgehende Wellenleiter und der vierte ausgehende Wellenleiter sich geradlinig unter dem Winkel Θ im Ausgangsabschnitt voneinander entfernen.

In anderen Ausführungsformen ist vorgesehen, daß die benachbart zu den Wellenleitern angeordneten Elektroden die Wellenleiter taperförmig bedecken oder taperförmig strukturiert und in einer Schicht mit den Wellenleitern positioniert sind.

In diesen Ausführungsformen wird die erfindungsgemäße Lösung den in einer weiteren Ausführungsform benannten möglichen Materialien für die Wellenleiter gerecht, die aus der Gruppe: III-V-Halbleiter, LiNbO₃, Glas, Si-Ge-Mischkristalle, SiO₂, Polymer, auszuwählen sind, um die gewünschte Wirkung in allen Varianten - nämlich die gezielte Einstellbarkeit der Differenz der Ausbreitungsgeschwindigkeit des -Lichtes in beiden Wellenleitern des Eingangsabschnitts auf Grund des thermo-optischen oder des elektrooptischen Effektes in Abhängigkeit vom Wellenleitermaterial - realisieren zu können. Mit dieser Möglichkeit, aus einem breiten Spektrum von Materialien für die Herstellung des erfindungsgemäßen digitalen optischen Schalters wählen zu können, wird das mögliche Anwendungsgebiet noch erweitert.

Weitere Ausführungsformen der Erfindung betreffen die Ansteuervarianten der Elektroden. So ist vorgesehen, daß die zu einem ankommenden Wellenleiter im Eingangsabschnitt benachbart angeordnete Elektrode und die zu dem spiegelsymmetrisch bzw. die zu dem punktsymmetrisch zu diesem ankommenden Wellenleiter ausgehenden Wellenleiter im Ausgangsabschnitt benachbart angeordnete Elektrode elektrisch austeuerbar ausgebildet sind.

Mit diesen Ausführungsformen der Erfindung, die die symmetrische Gestaltung der ankommenden Wellenleiter im Eingangsabschnitt und die der ausgehenden Wellenleiter im Ausgangsabschnitt sowie die gezielte Einstellung einer Asymmetrie in der Lichtausbreitung zwischen den Wellenleitern im Eingangs- bzw. Ausgangsabschnitt mittels der Ansteuerung der Elektroden und damit in ihrer Wirkung die Änderung des Brechungsindexes und somit die Änderung der Lichtausbreitung in den zu den angesteuerten Elektroden benachbart angeordneten Wellenleiternbetreffen, ist eine große Variabilität in der Realisierung des erfindungsgemäßen DOS gegeben.

Der Bereich, in dem die Elektrode taperförmig auf den Wellenleiter wirkt, sichert den adiabatischen Wellenleiterübergang in dem Eingangs- und dem Ausgangsabschnitt. Die Bedingung für die adiabatische Modenevolution ist mittels einer angesteuerten Elektrode im Eingangsabschnitt bei einem ersten ankommenden Wellenleiter und einem zweiten ankommenden Wellenleiter, die sich geradlinig unter einem Winkel Θ mit Θ << Δβ / γ im Eingangsabschnitt einander nahern und berühren, und einem dritten ausgehenden Wellenleiter und einem vierten ausgehenden Wellenleiter die sich geradlinig unter dem gleichen Winkel Θ im Ausgangsabschnitt von dem Berührungspunkt voneinander entfernen, dadurch einstellbar, daß gezielt eine Differenz der Ausbreitungsgeschwindigkeit des Lichtes Δβ in den beiden Wellenleitern des Eingangsabschnitts erzeugt wird. Entspricht der Winkel Θ den Bedingungen für die adiabatische Modenentwicklung und ist also klein genug, so wird entweder die symmetrische Mode oder die unsymmetrische Mode in der zentralen Region, in der sich der Punkt befindet, in dem sich die geradlinig nähernden Wellenleiter im Eingangsabschnitt treffen und von dem die ausgehenden Wellenleiter im Ausgangsabschnitt weggehen, in Abhängigkeit davon angeregt, ob der entsprechende Eingangswellenleiter geheizt oder ungeheizt ist. Demzufolge kann die symmetrische Mode aus der zentralen Region dem gewünschten Ausgangswellenleiter durch genaue Einstellung der Heizleistung der zu den Ausgangswellenleitern benachbart angeordneten Elektroden zugeführt werden. Die symmetrische Mode breitet sich immer im ungeheizten Wellenleiter aus und die unsymmetrische Mode im geheizten Wellenleiter, wenn die Heizleistung groß genug ist. Die erfindungsgemäße Lösung realisiert damit jeden Wellenleiter im Eingangs- bzw. Ausgangsabschnitt als monomodigen. Analog kann die Bedingung für die adiabatische Modenevolution eingestellt werden, wenn in mindestens einem der Abschnitte des erfindungsgemäßen DOS, d.h. im Eingangs- oder Ausgangsabschnitt, die Wellenleiter bogenförmig ausgebildet sind.

In einer Matrix, bestehend aus mehreren in Kaskaden angeordneten dem Stand der Technik nach bekannten DOS, sind wegen der unterschiedlichen Abmessungen der Eingangswellenleiterzweige Taperregionen notwendig, die die Baulänge der Matrix in unerwünschter Weise vergrößern und eine optimale Einfügungsdämpfung nicht zulassen. Diese Nachteile treten bei der Ausführungsform der Erfindung, die die spiegel- und punktsymmetrische Gestaltung der ankommenden Wellenleiter im Eingangsabschnitt zu den ausgehenden Wellenleitern im Ausgangsabschnitt beinhaltet und einen bidirektional betreibbaren DOS realisiert, nicht auf, da die Feldverteilung nur einem Querschnitt, der für alle Wellenleiter gleich ist, angepaßt werden muß. Deshalb ist der erfindungsgemäße DOS in vorteilhafter Weise als Matrixbaustein einsetzbar. Außerdem stellt er im Vergleich zum im Stand der Technik erwähnten 1X2-Y-Schalter, der in einer aus vier dieser Schalter bestehenden Matrix die gleiche Funktion erfüllen kann wie der erfindungsgemäße DOS, eine sehr kompakte Anordnung dar.

In einer bevorzugten Ausführungsform des erfindungsgemäßen digitalen optischen Schalters ist dieser auf Polymerbasis aufgebaut. Der Winkel Θ, den die beiden linear konvergierend bzw, linear divergierend verlaufenden Wellenleiter zueinander einschließen, ist ≤ 0,1°. Die Elektroden sind über den Wellenleitern, diese taperförmig bedeckend, auf einer Pufferzwischenschicht angeordnet. Über die Ansteuerung der Elektroden ist in dieser bevorzugten Ausgestaltung eine Änderung des Brechungsindexes der entsprechenden Wellenleiter von Δn > 0,0015 einstellbar. Die Verwendung von Polymer-Wellenleitern ermöglicht aufgrund der inzwischen gut beherrschbaren Herstellungsverfahren eine große Anzahl von Strukturierungsmöglichkeiten. Außerdem weisen Polymere einen großen thermo-optischen Koeffizienten, d.h. die Änderung der Temperatur bewirkt eine große Änderung des Brechnungsindexes, in Kombination mit einer geringen Leitfähigkeit auf. Mittels der Polymertechnologie ist es möglich, in Form einer Hybridtechnologie eine Vielzahl optischer Komponenten auf einem einzigen Substrat zu integrieren.

Im folgenden werden Ausführungsbeispiele der Erfindung anhand von Zeichnungen näher erläutert.
Dabei zeigen:
- Fig. 1: eine schematische Darstellung der Mehrschichtstruktur eines erfindungsgemäßen DOS auf Polymerbasis in der Draufsicht;
- Fig. 2: einen Querschnitt der in Fig. 1 dargestellten Mehrschichtstruktur durch AA';
- Fig. 3: die BPM (Beam-Propagation-Method)-Simulation für den Längs("bar")Zustand des in Fig. 1 dargestellten DOS;
- Fig. 4: die BPM-Simulation für den Kreuz-("cross")Zustand des in Fig. 1 dargestellten DOS;
- Fig. 5: eine Meßkurve der optischen Leistung der Wellenleiter des Ausgangsabschnitts in Abhängigkeit von der elektrischen Leistung zur Ansteuerung der Elektroden eines DOS gem. Fig. 1 im Längs("bar")Zustand;
- Fig. 6: eine Meßkurve der optischen Leistung der Wellenleiter des Ausgangsabschnitts in Abhängigkeit von der elektrischen Leistung zur Ansteuerung der Elektroden eines DOS gem. Fig. 1 im Kreuz("cross")Zustand und
- Fig. 7: eine Meßkurve, die die Einstellbarkeit des Schaltverhaltens darstellt.

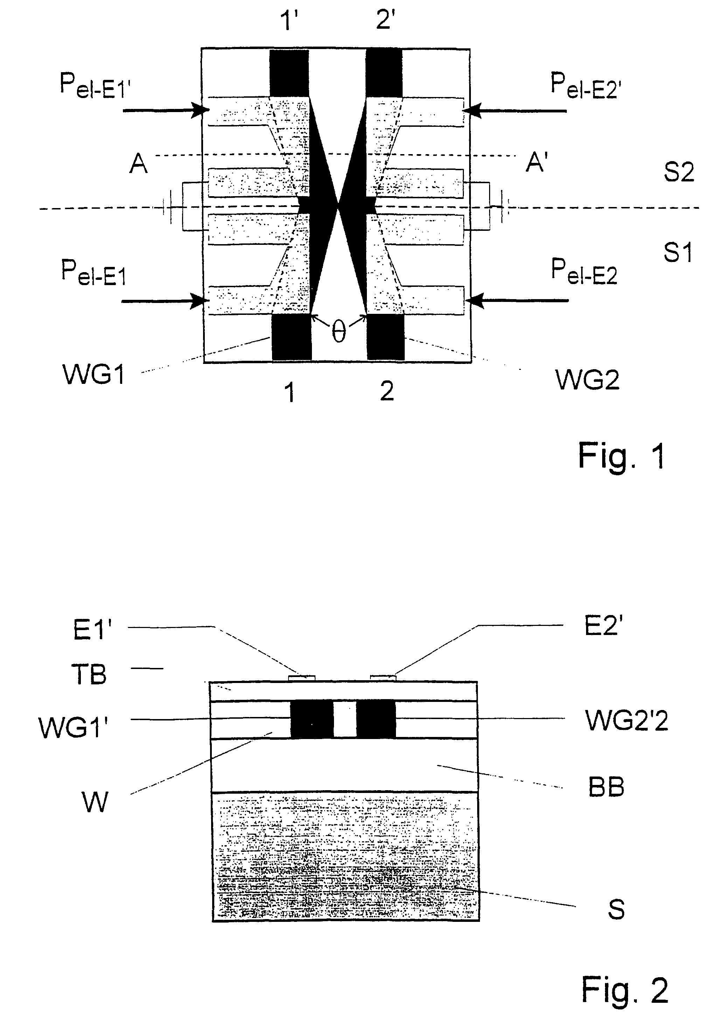

Die in Fig. 1 schematisch dargestellte Mehrschichtstruktur eines erfindungsgemäßen DOS auf Polymerbasis enthält symmetrische Wellenleiter mit gleichem Querschnitt und Brechungsindex im Eingangs **S1** und im Ausgangsabschnitt **S2.** Im Eingangsabschnitt **S1** sind zwei ankommende Wellenleiter **WG1** und **WG2** mit den entsprechenden Eingangstoren **1** und **2** in einem Winkel Θ = 0,08 ° angeordnet. Im Ausgangsabschnitt **S2** sind die sich im gleichen Winkel Θ voneinander entfernenden beiden Wellenleiter **WG1'** und **WG2'** mit den entsprechenden Ausgangstoren **1'** und **2'** dargestellt. Die Wellenleiter im Eingangsabchnitt S1 sind symmetrisch zu den Wellenleitern im Ausgangsabschnitt S2 angeordnet. Die Wellenleiter wurden aus PMMA mittels einer Standard-Polymerwellenleiter-Technologie auf einer 3"-Si-Scheibe hergestellt. Sie weisen einen Querschnitt von 7 µm x 7 µm auf. Die Eingangs- bzw. Ausgangswellenleiter sind 250 µm voneinander entfernt. Die Länge des gesamten DOS beträgt 25 mm. Diese vier Wellenleiter **WG1, WG2, WG1'** und **WG2'** sind von jeweils einer taperförmig den entsprechenden Wellenleiter überlappenden Elektrode **E1, E2, E1'** und **E2'** bedeckt. Die Ausbreitungseigenschaften des Lichtes sind in dem erfindungsgemäßen DOS durch die adiabatische Modenentwicklung charakterisiert. Für jeden Wellenleiter **WG1, WG2, WG1'** und **WG2'** können die Bedingungen für die adiabatische Modenentwicklung durch die Ansteuerung der entsprechenden Elektrode **E1, E2, E1'** und **E2'** realisiert werden. Die erfindungsgemäße Lösung gestattet erstmals die Herstellung eines DOS auf Polymerbasis mit je zwei Ein- und Ausgängen.

In Fig. 2 ist der bereits in der Draufsicht beschriebene 2X2-DOS auf Polymerbasis im Querschnitt dargestellt. Auf einem Si-Substrat **S,** das als Wärmesenke dient, ist eine SiO_{X}-Pufferschicht **BB** angeordnet. Eine 3 µm dicke Pufferschicht **TB** aus Teflon ist zur Verringerung von Verlusten und zum Schutz gegen Feuchtigkeit auf der Wellenleiterschicht **W,** in der die Wellenleiter **WG1, WG2, WG1'** und **WG2'** geführt sind, angeordnet. Als letzte Schicht ist auf jedem Wellenleiter **WG1, WG2, WG1'** und **WG2'** eine entsprechende Heizelektrode **E1, E2, E1'** und **E2'** derart angeordnet, daß sie den darunterliegenden Wellenleiter taperförmig überlappt.

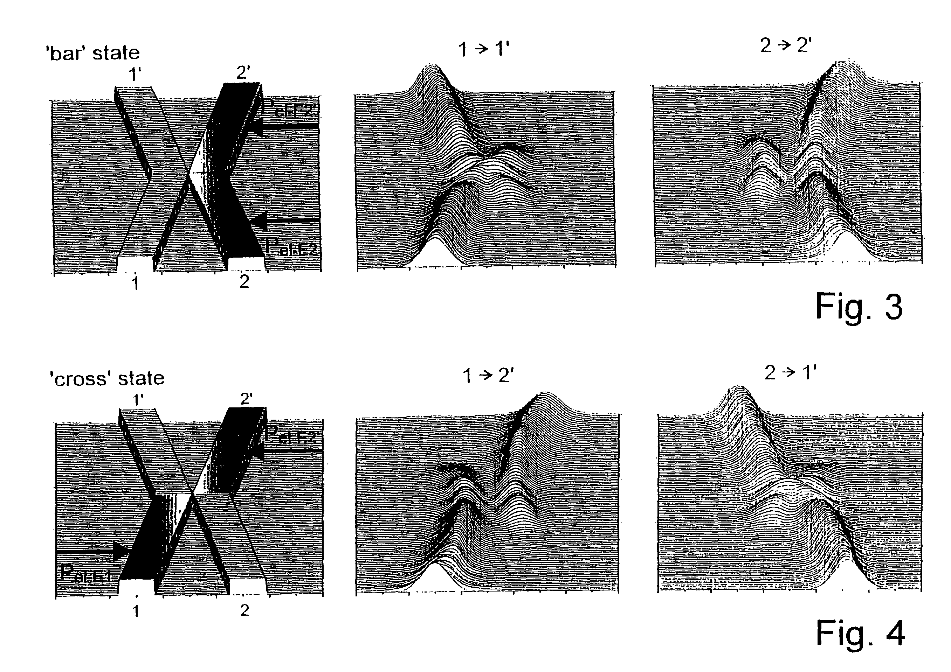

Die Funktionsweise des erfindungsgemäßen DOS, die auf der adiabatischen Modenentwicklung beruht, läßt sich besonders gut anhand der Fig. 3 und Fig. 4 beschreiben, bei denen im ersten Teilbild jeweils der Eingangs- und Ausgangsabschnitt **S1, S2** mit den X-förmig angeordneten Wellenleitern **WG1, WG2, WG1'** und **WG2'** dargestellt, sowie angedeutet ist, welche Elektrode beheizt wird. Die folgenden Teilbilder zeigen die Möglichkeiten der Ausbreitung einer Lichtwelle in den einzelnen Wellenleitern **WG1, WG2, WG1'** und **WG2'** für den Längs-("bar")Zustand bzw. den Kreuz("cross")Zustand entsprechend.

Wenn die Elektroden **E2** und **E2',** wie in Fig. 3 dargestellt, erhitzt - d.h. mit einer Leistung **P**_{**el-E2**} und **P**_{**el-E2'**} entsprechend angesteuert - werden, dann arbeitet der DOS im Längs-("bar")Zustand. Gelangt nun das in den ungeheizten Wellenleiter **WG1** geleitete Licht in die zentrale Region, wird - wie im zweiten Teilbild zu erkennen ist - die symmetrische Mode durch den Wellenleiter **WG1'** geführt, der im Vergleich zum Wellenleiter **WG2'** einen größeren Brechnungsindex aufweist. Wird nun Licht in den geheizten Wellenleiter **WG2** geführt, so wird in der zentralen Region die unsymmetrische Mode weiter in den Wellenleiter **WG2**' geführt, der ja einen geringeren Brechungsindex aufweist. Zwischen dem unbeheizten Wellenleiter **WG1/WG1'** und dem beheizten Wellenleiter **WG2/WG2'** wurde eine Differenz des Brechungsindexes von Δn = 0,0025 festgestellt.

Werden nun - wie im ersten Teilbild der Fig. 4 zu erkennen ist - die Elektroden **E1** und **E2'** erhitzt - d.h. mit einer Leistung **P**_{**el-E1**} und **P**_{**el-E2'**} entsprechend angesteuert -, arbeitet der erfindungsgemäße DOS im Kreuz("cross")Zustand. Auch hier wurde die gleiche, bereits oben erwähnte Brechungsindexdifferenz festgestellt. Wenn das Licht in den geheizten Wellenleiter **WG1** geführt wird, wird die unsymmetrische Mode in der zentralen Region angeregt und das Licht durch den geheizten Wellenleiter **WG2**' geführt, der den niedrigeren Brechungsindex aufweist. Wird das Licht in den ungeheizten Wellenleiter **WG2** geführt, wird die symmetrische Mode in der zentralen Region angeregt und das Licht wird durch den Wellenleiter **WG1'** geführt. Es wurde festgestellt, daß die adiabatischen Schaltbedingungen sowohl an den Wellenleitern im Eingangsabschnitt als auch an den Wellenleitern im Ausgangsabschnitt eingehalten werden, solange bei einem Winkel zwischen den Wellenleitern im Eingangs- bzw. Ausgangsabschnitt von Θ ≤ 0,1 ° die Differenz des Brechungsindexes Δn > 0,0015 beträgt.

Um den erfindungsgemäßen DOS auf Polymerbasis, dessen schematischer Aufbau in Fig. 1 und Fig. 2 und Funktionsweise in Fig. 3 und Fig. 4 dargestellt ist, zu charakterisieren, wurde Licht einer Laserdiode mit λ = 1,55 µm in das Eingangstor **1** oder das Eingangstor **2** eingekoppelt und die optischen Ausgangsleistung **P**_{**opt.**} an den Ausgangstoren **1'** und **2'** gemessen. Da festgestellt wurde, daß die Werte für TE- und TM-Polarisation nur um < ± 0,5 dB polarisationsabhängig waren, sind nur die Ergebnisse für die TM-Polarisation dargestellt.

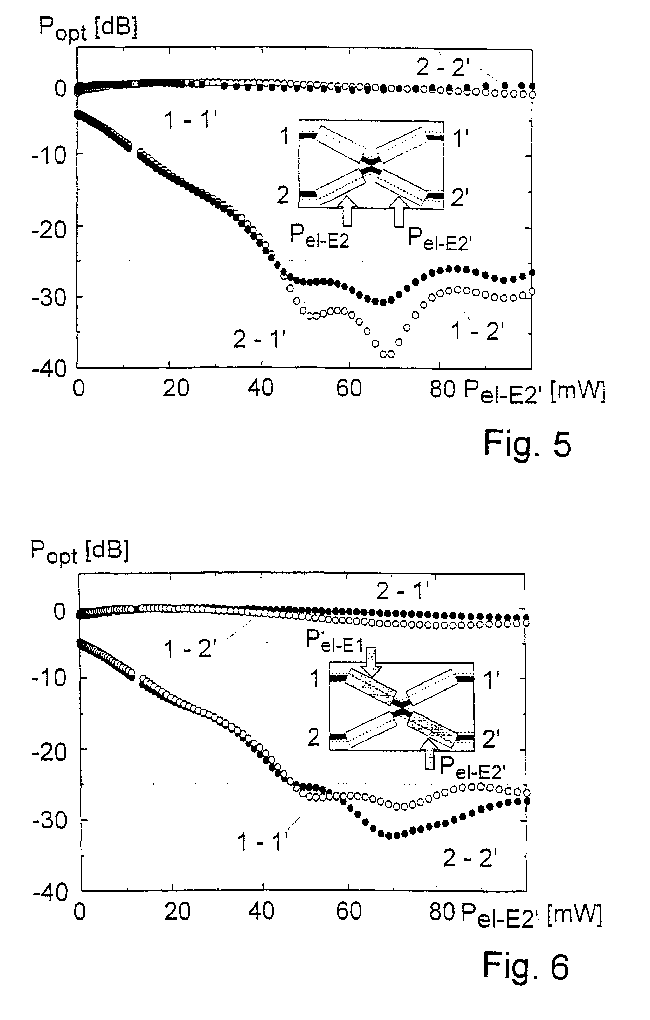

So zeigt Fig. 5 die Meßkurve der Übertragungscharakteristik bei einer Wellenlänge von λ = 1,55 µm als eine Funktion der elektrischen Leistung **P**_{**el-E2**}_{'}, d.h. in diesem Fall wurde die Elektrode **E2'** geheizt. Die Elektrode **E2** wurde mit einer konstanten Leistung **P**_{**e**}ₗ_{**-E2**} angesteuert, die hier 65 mW beträgt (Ansteuerung im eingeschobenen Bild dargestellt). Dies ist notwendig, um die adiabatische Modenentwicklung in den Wellenleitern **WG1** und **WG2** des Eingangsabschnitts **S1** zu realisieren. In dieser Konfiguration arbeitet der Schalter im Längs-("bar")Zustand. Der gemessene Wert des Übersprechens ist < -25 dB bei einer elektrischen Schaltleistung von **P**_{**el-E2'**} ≥ 45 mW. Es wurde festgestellt, daß sich dieser Wert für Schaltleistungen **P**_{**el-E2'**} < 100 mW nicht ändert.

Die Übertragungscharakteristik für einen erfindungsgemäßen DOS auf Polymerbasis als Funktion der elektrischen Leistung **P**_{**el-E2'**} ist für den Kreuz("cross")Zustand in Fig. 6 dargestellt. In diesem Fall wird die Elektrode **E1** mit einer konstanten elektrischen Leistung **P**_{**el-E1**} **=** 45 mW angesteuert, um wiederum den Bedingungen der adiabatischen Modenentwicklung in den Wellenleitern **WG1** und **WG2** des Eingangsabschnitts **S1** zu genügen. Nimmt die variabel einstellbare Schaltleistung **P**_{**el-E2'**} Werte von ≥ 45 mW an, ist auch hier ein Wert des Übersprechens von < -25 dB gemessen worden. Die geringe Abweichung der konstant einzustellenden Leistungen in den beiden beschriebenen Schaltzuständen ist sicherlich auf geringe Verschiebungen der Elektroden und Wellenleiter während des Herstellungsprozesses zurückzuführen. Dadurch wird aber das Prinzip der Erfindung nicht berührt, jeden Wellenleiter für nur eine bestimmte Mode durchlässig zu gestalten.

Die Schaltzeit für den thermo-optischen DOS auf Polymerbasis ist in beiden Schaltkonfigurationen < 1 ms.

Die Übertragungscharakteristik wurde für den gleichen Schalter auch bei λ = 1,3 µm erstellt und zeigt ein ähnlich digitales Schaltverhalten (nicht dargestellt).

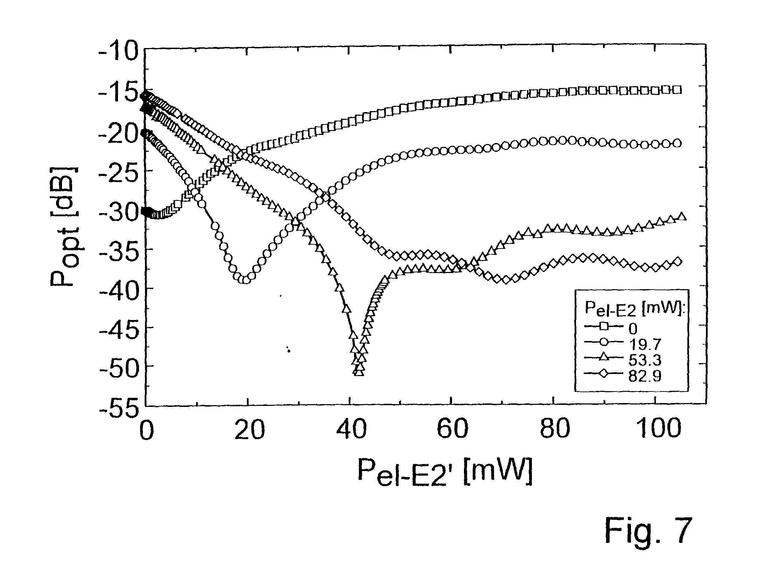

Bei Betrachtung der Fig. 7, in der die Übertragungscharakteristiken für den erfindungsgemäßen DOS auf Polymerbasis mit der gleichen Elektrodenkonfiguration wie in Fig. 5 gezeigt jedoch mit verschiedenen Werten für **P**_{**el-E2**} dargestellt sind, wird deutlich, daß das Schaltverhalten eines solchen DOS über eine Ansteuerung einer Elektrode im Ausgangsabschnitt mit einer variablen Schaltleistung und über eine konstante Grundansteuerung einer Elektrode im Eingangsabschnitt einstellbar ist. Es ist zu erkennen, daß in Abhängigkeit des konstant eingestellten Wertes **P**_{**e**}ₗ_{**-E2**} für die Grundansteuerung der Elektrode **E2** im Eingangsabschnitt **S1** die "Digitalität" des DOS derart einstellbar ist, daß in einem engen Bereich von **P**_{**e**}ₗ₋_{**E2**}_{'}-Werten ein sehr gutes Extinktionsverhältnis gewährleistet ist. Wird dieser Wert nun verändert, zeigt sich ein "robustes" digitales Schaltverhalten bei geringerem Extinktionsverhältnis.

Das beschriebene Schaltverhalten läßt Toleranzen im technologischen Herstellungsprozeß zu und macht eine präzise Strom- bzw. Spannungskontrolle nicht mehr notwendig. Außerdem ist das Schaltverhalten des dargestellten DOS stabil gegen Änderungen der Umgebungstemperatur.

## Patentansprüche

1. Digitaler optischer Schalter, umfassend:
- einen ersten Abschnitt, genannt Eingangsabschnitt, mit einem ersten ankommenden Wellenleiter und einem zweiten ankommenden Wellenleiter, wobei sich diese Wellenleiter bis zu einem Punkt ihres Wechselwirkungsbereiches annähern und *sich* in diesem berühren, und
- einen zweiten Abschnitt, genannt Ausgangsabschnitt, mit einem dritten ausgehenden Wellenleiter und einem vierten ausgehenden Wellenleiter, wobei sich die ausgehenden Wellenleiter von diesem erwähnten Punkt bis zu einem Punkt außerhalb ihres Wechselwirkungsbereiches voneinander entfernen, wobei sich die Wellenleiter des zweiten Abschnitts an diejenigen des ersten Abschnitts anschließen, und
- Mittel zum steuerbaren Beeinflussen des Lichtausbreitungszustandes nach der adiabatischen Modenevolution,
**dadurch gekennzeichnet, daß**
der erste ankommende Wellenleiter zum zweiten ankommenden Wellenleiter im Eingangsabschnitt und der dritte ausgehende Wellenleiter zum vierten ausgehenden Wellenleiter im Ausgangsabschnitt identisch zueinander in Querschnitt, Brechungsindex und symmetrisch in ihrer Anordnung bezüglich der Ausbreitungsrichtung des Lichtes sind und strukturierte Elektroden mit örtlich variabler Breite *die Wellenleiter derart überlappen, daß sich eine örtlich variable Einwirkung auf den Wellenleiter ergibt,* und eine *der* im Eingangsabschnitt angeordneten *strukturierten* Elektroden und eine *der* im Ausgangsabschnitt angeordneten *strukturierten* Elektroden elektrisch ansteuerbar ausgebildet sind.

2. Digitaler optischer Schalter nach Anspruch 1,
**dadurch gekennzeichnet, daß**
der erste ankommende Wellenleiter und der zweite ankommende Wellenleiter sich geradlinig unter einem Winkel Θ mit Θ << Δβ/γ im Eingangsabschnitt annähern, *wobei* Δβ *die durchschnittliche Differenz der Ausbreitungskonstanten der zwei Moden und γ die transversale Ausbreitungskonstante in der Wellenleiterumgebung bezeichnet,* und der dritte ausgehende Wellenleiter und der vierte ausgehende Wellenleiter sich geradlinig unter dem gleichen Winkel Θ im Ausgangsabschnitt voneinander entfernen.

3. Digitaler optischer Schalter nach Anspruch 1,
**dadurch gekennzeichnet, daß**
der erste ankommende Wellenleiter und der zweite ankommende Wellenleiter sich bogenförmig im Eingangsabschnitt annähern und der dritte ausgehende Wellenleiter und der vierte ausgehende Wellenleiter sich bogenförmig im Ausgangsabschnitt voneinander entfernen.

4. Digitaler optischer Schalter nach einem der Ansprüche 1 bis 3,
**dadurch gekennzeichnet, daß**
die ankommenden Wellenleiter im Eingangsabschnitt identisch bezüglich-Querschnitt, und Brechungsindex und Symmetrisch in ihrer Anordnung zu den ausgehenden Wellenleitern im Ausgangsabschnitt ausgebildet sind.

5. Digitaler optischer Schalter nach Anspruch 1,
**dadurch gekennzeichnet, daß**
der erste ankommende Wellenleiter und der zweite ankommende Wellenleiter sich geradlinig unter einem Winkel Θ mit Θ << Δβ/γ im Eingangsabschnitt einander nähern und der dritte ausgehende Wellenleiter und der vierte ausgehende Wellenleiter sich bogenförmig im Ausgangsabschnitt voneinander entfernen.

6. Digitaler optischer Schalter nach Anspruch 1,
**dadurch gekennzeichnet, daß**
der erste ankommende Wellenleiter und der zweite ankommende Wellenleiter sich bogenförmig im Eingangsabschnitt einander nähern und der dritte ausgehende Wellenleiter und der vlerte ausgehende Wellenleiter sich geradlinig unter einem Winkel Θ mit Θ << Δβ/γ im Ausgangsabschnitt voneinander entfernen.

7. Digitaler optischer Schalter nach einem der Ansprüche 1 bis 6,
**dadurch gekennzeichnet, daß**
die benachbart zu den Wellenleitern angeordneten Elektroden die Wellenleiter taperförmig bedecken.

8. Digitaler optischer Schalter nach einem der Ansprüche 1 bis 6,
**dadurch gekennzeichnet, daß**
die benachbart zu den Wellenleitern angeordneten Elektroden taperförmig strukturiert und in einer Schicht mit den Wellenleitern positioniert sind.

9. Digitaler optischer Schalter nach einem der Ansprüche 1, 7 und 8,
**dadurch gekennzeichnet, daß**
die zu einem ankommenden Wellenleiter im Eingangsabschnitt benachbarte Elektrode und die zu dem spiegelsymmetrisch zu diesem ankommenden Wellenleiter ausgehenden Wellenleiter im Ausgangsabschnitt benachbarte Elektrode elektrisch ansteuerbar ausgebildet sind.

10. Digitaler optischer Schalter nach einem der Ansprüche 1, 7 und 8,
**dadurch gekennzeichnet, daß**
die zu einem ankommenden Wellenleiter im Eingangsabschnitt benachbarte Elektrode und die zu dem punktsymmetrisch zu diesem ankommenden Wellenleiter ausgehenden Wellenleiter im Ausgangsabschnitt benachbarte Elektrode elektrisch ansteuerbar ausgebildet sind.

11. Digitaler optischer Schalter nach Anspruch 1,
**dadurch gekennzeichnet, daß**
die Wellenleiter aus einem Material der nachfolgend aufgeführten Gruppe ausgewählt sind: III-V-Halbleiter, LiNbO₃, Glas, Si-Ge-Mischkristalle, SiO₂, Polymer.

12. Digitaler optischer Schalter nach einem der Ansprüche 1, 2, 4, 7 und 11,
**dadurch gekennzeichnet, daß**
in einem Schalter auf Polymerbasis der Winkel Θ, den die beiden geradlinig konvergierend (WG1, WG2) bzw. divergierend (WG1', WG2') verlaufenden Wellenleiter entsprechend im Eingangs- (S1) oder Ausgangsabschnitt (S2) zueinander einschließen, ≤ 0,1° ist, die Elektroden (E1, E2, E1', E2') über den Wellenleitern (WG1, WG2, WG1', WG2') diese taperförmig bedeckend auf einer Pufferzwischenschicht (TB) angeordnet sind und je eine Elektrode (E1 oder E2) im Eingangs - (S1) und je eine Elektrode (E1' oder E2') im Ausgangsabschnitt (S2) derart ansteuerbar ausgebildet ist, daß eine Anderung des Brechungsindexes der entsprechenden Wellenleiter von Δn > 0,0015 realisierbar ist.

## Claims

1. Digital optical switch, comprising:
- a first section, termed input section, with a first incoming waveguide and a second incoming waveguide, these waveguides converging up to a point of their area of interaction and coming into contact in this, and
- a second section, termed output section, with a third outgoing waveguide and a fourth outgoing waveguide, the outgoing waveguides diverging from one another from this stated point up to a point outside their area of interaction, the waveguides of the second section connecting to those of the first section, and
- means for controllably influencing the light propagation state according to adiabatic mode evolution,
**characterized in that** the first incoming waveguide and the second incoming waveguide in the input section, and the third outgoing waveguide and the fourth outgoing waveguide in the output section respectively, are identical to one another in cross-section and refractive index and symmetrical in their arrangement with reference to the propagation direction of the light, and structured electrodes of locally variable width overlap the waveguides in such a way that a locally variable effect on the waveguide results, and one of the structured electrodes disposed in the input section and one of the structured electrodes disposed in the output section are formed to be electrically activatable.

2. Digital optical switch according to claim 1,
**characterized in that** the first incoming waveguide and the second incoming waveguide converge linearly at an angle θ with θ <<Δβ/γ in the input section,
Δβ describing the average difference of the propagation constants of the two modes and γ the transversal propagation constant in the area of the waveguide, and the third outgoing waveguide and the fourth outgoing waveguide diverge linearly from one another at the same angle θ in the output section.

3. Digital optical switch according to claim 1,
**characterized in that** the first incoming waveguide and the second incoming waveguide converge in a curve shape in the input section and the third outgoing waveguide and the fourth outgoing waveguide diverge from one another in a curve shape in the output section.

4. Digital optical switch according to one of claims 1 to 3, **characterized in that** the incoming waveguides in the input section are formed identically with reference to cross-section and refractive index and symmetrically in their arrangement to the outgoing waveguides in the output section.

5. Digital optical switch according to claim 1,
**characterized in that** the first incoming waveguide and the second incoming waveguide converge linearly at an angle θ with θ <<Δβ/γ in the input section and the third outgoing waveguide and the fourth outgoing waveguide diverge from one another in a curve shape in the output section.

6. Digital optical switch according to claim 1,
**characterized in that** the first incoming waveguide and the second incoming waveguide converge in a curve shape in the input section and the third outgoing waveguide and the fourth outgoing waveguide diverge from one another linearly at an angle θ with θ <<Δβ/γ in the output section.

7. Digital optical switch according to one of claims 1 to 6, **characterized in that** the electrodes arranged adjacent to the waveguides cover the waveguides taperingly.

8. Digital optical switch according to one of claims 1 to 6, **characterized in that** the electrodes arranged adjacent to the waveguides are structured taperingly and positioned in a layer with the waveguides.

9. Digital optical switch according to one of claims 1, 7 and 8, **characterized in that** the electrode adjacent to an incoming waveguide in the input section and the electrode adjacent to the outgoing waveguide in the output section that is in mirror symmetry to this incoming waveguide are formed to be electrically activatable.

10. Digital optical switch according to one of claims 1, 7 and 8, **characterized in that** the electrode adjacent to an incoming waveguide in the input section and the electrode adjacent to the outgoing waveguide in the output section that is point-symmetric to this incoming waveguide are formed to be electrically activatable.

11. Digital optical switch according to claim 1,
**characterized in that** the waveguides are selected from a material in the group listed below:III-V semiconductor, LiNbO₃, glass, Si-Ge mixed crystals, SiO₂, polymer.

12. Digital optical switch according to one of claims 2, 4, 7 and 11, **characterized in that** in a switch on a polymer basis, the angle θ, which the two waveguides linearly converging (WG1, WG2) or diverging (WG1', WG2') accordingly in the input (S1) or output section (S2) enclose relative to one another, is ≤ 0.1°, the electrodes (E1, E2, E1', E2') are arranged over the waveguides (WG1, WG2, WG1', WG2') covering these taperingly on a buffer intermediate layer (TB), and one electrode (E1 or E2) in the input section (S1) and one electrode (E1' or E2') in the output section (S2) in each case is electrically activatable in such a way that a change in the refractive index of the corresponding waveguides of Δn > 0.0015 can be realized.

## Revendications

1. Commutateur optique numérique comprenant :
- un premier segment appelé segment d'entrée avec un premier guide d'onde entrant et un second guide d'onde entrant ces guides d'onde se rapprochant jusqu'au point de leur zone de coopération et se touchent à ce point, et
- un second segment appelé segment de sortie avec un troisième guide d'onde sortant et un quatrième guide d'onde sortant, les guides d'onde sortant se séparant à partir de ce point jusqu'à un point à l'extérieur de leur zone de coopération les guides d'onde du second segment étant reliés à ceux du premier segment, et
- des moyens pour influencer de manière commandée l'état d'étalement de la lumière selon le mode d'évolution adiabatique,
**caractérisé en ce que**
le premier guide d'onde entrant et le second guide d'onde entrant du segment d'entrée et le troisième guide d'onde sortant et le quatrième guide d'onde sortant du segment de sortie sont respectivement identiques en section, en indice de réfraction et symétriques dans leur disposition par rapport à la direction de développement de la lumière et leurs électrodes sont structurées avec une largeur locale variable qui chevauche les guides d'onde pour avoir un effet localement variable sur les guides d'onde et l'une des électrodes structurées dans le segment d'entrée et l'une des électrodes structurées dans le segment de sortie peuvent être commandées électriquement.

2. Commutateur optique numérique selon la revendication 1,
**caractérisé en ce que**
le premier et le second guides d'onde entrants se rapprochent de manière rectiligne sous un angle θ tel que θ<<Δβ/γ, dans le segment d'entrée, Δβ étant la différence moyenne des constantes d'étalement des deux modes et γ la constante d'étalement transversale dans l'environnement du guide d'onde, et
le troisième et le quatrième guides d'onde sortants s'éloignent dans le segment de sortie, en ligne droite sous le même angle θ.

3. Commutateur optique numérique selon la revendication 1,
**caractérisé en ce que**
le premier et le second guide d'onde entrants se rapprochent dans le segment d'entrée suivant une forme courbe et le troisième et le quatrième guides d'onde sortants s'éloignent l'un de l'autre suivant une courbe dans le segment de sortie.

4. Commutateur optique numérique selon l'une quelconque des revendications 1 à 3,
**caractérisé en ce que**
les guides d'onde entrant dans le segment d'entrée sont identiques pour leur section et leur indice de réfraction et leur disposition est symétrique par rapport à celle des guides d'onde sortant du segment de sortie.

5. Commutateur optique numérique selon la revendication 1,
**caractérisé en ce que**
le premier et le second guide d'onde entrants se rapprochent en ligne droite suivant un angle θ tel que θ<<Δβ/γ, dans le segment d'entrée et
le troisième et le quatrième guide d'onde sortants s'éloignent suivant un tracé courbe dans le segment de sortie.

6. Commutateur optique numérique selon la revendication 1,
**caractérisé en ce que**
le premier et le second guide d'onde entrant se rapprochent suivant un tracé courbe dans le segment d'entrée et le troisième et
le quatrième guide d'onde sortant s'éloignent suivant un tracé rectiligne suivant l'ange θ tel que θ<<Δβ/γ, dans le segment de sortie.

7. Commutateur optique numérique selon l'une quelconque des revendications 1 à 6,
**caractérisé en ce que**
les électrodes voisines des guides d'onde recouvrent les guides d'onde suivant une forme trapézoïdale.

8. Commutateur optique numérique selon l'une quelconque des revendications 1 à 6,
**caractérisé en ce que**
les électrodes voisines des guides d'onde ont une structure trapézoïdale et sont placées dans une couche avec les guides d'onde.

9. Commutateur optique numérique selon l'une quelconque des revendications 1, 7, 8,
**caractérisé en ce que**
l'électrode voisine d'un guide d'onde entrant dans le segment d'entrée et l'électrode voisine dans le segment de sortie du guide d'onde symétrique suivant une symétrie plane de ce guide d'onde entrant, sont à commande électrique.

10. Commutateur optique numérique selon l'une quelconque des revendications 1, 7, 8,
**caractérisé en ce que**
l'électrode voisine d'un guide d'onde entrant dans le segment d'entrée et l'électrode voisine dans le segment de sortie du guide d'onde sortant, symétrique selon une symétrie ponctuelle par rapport à ce guide d'onde entrant sont à commande électrique.

11. Commutateur optique numérique selon la revendication 1,
**caractérisé en ce que**
les guides d'onde sont réalisés en une matière choisie dans le groupe suivant : semi-conducteurs III-V, LiNbO₃, verre, cristaux mixtes Si-Ge, SiO₂, polymères.

12. Commutateur optique numérique selon l'une quelconque des revendications 1, 2, 4, 7, 11,
**caractérisé en ce que**
dans un commutateur à base de polymère, l'angle θ compris entre les deux guides d'onde rectilignes convergents (WG1, WG2) ou divergents (WG1', WG2') correspondant dans le segment d'entrée (S1) ou le segment de sortie (S2) est ≤0,1°),
les électrodes (E1, E2, E1', E2') sur les guides d'onde (WG1, WG2, WG1', WG2') recouvrent ceux-ci suivant une forme trapézoïdale en étant prévues sur une couche tampon intermédiaire (TB), et
chaque fois une électrode (E1 ou E2) du segment d'entrée (S1) et chaque fois une électrode (E1' ou E2') du segment de sortie (S2) sont commandées pour donner une variation de l'indice de réfraction du guide d'onde correspondant tel que Δn > 0,0015.
